# EUROPEAN PATENT APPLICATION

(11) **EP 2 511 841 A2**
(43) Date of publication of application: **17.10.2012**
(21) Application number: 12163130.3
(22) Date of filing: 04.04.2012
(51) Int. Cl.: G06F 17/50

(54) **System and method for generation of cim-based power system circuit models**

(30) Priority: 11.04.2011 US 201113083761
(71) Applicant: General Electric Company, Schenectady, NY 12345 (US)
(72) Inventor: San Andres, Ramon Juan, Atlanta, GA 30339 (US); Nigam, Atul, Atlanta, GA 30339 (US)
(74) Representative: Cleary, Fidelma

(57) **Abstract**

Systems (100) and methods (300, 500) for generating common information model (CIM) based circuit models of power systems to be used as a testing framework for power system software applications (260) are disclosed. Valid CIM-based circuit models can be constructed from simplified circuit definitions specified in a simplified circuit representation file (210). In a particular implementation, unspecified CIM objects required by the CIM model that are not essential for the testing purposes of an individual circuit, such as terminals, line segments, connectivity nodes, and other CIM objects, are generated automatically and are not required in the simplified circuit representation file (210).

## Description

### FIELD OF THE INVENTION

The present disclosure relates generally to a common information model (CIM) based circuit model generator and more particularly to a CIM-based circuit model generator that generates valid CIM-based circuit models from simplified circuit definitions.

### BACKGROUND OF THE INVENTION

Power system circuit models are typically developed for use by power system software to test various parameters and scenarios of a power system. The standard model known as the common information model (CIM) provides an open standard that defines how many typical objects used in power systems, such as transformers, buses, breakers, and other suitable objects, are represented in a power system circuit model. CIM-based circuit models can be used across multiple different power system testing platforms and can facilitate the exchange of circuit models and circuit data between multiple entities.

Constructing CIM-based circuit models to test specific scenarios can be difficult and time consuming. For instance, the generation of a CIM-based circuit model can require the creation and manipulation of extensible markup language (XML) files. In addition, the generation of a CIM-based circuit model can require that all CIM objects be specified. For instance, a CIM-based model connection between one or more circuit objects requires specification of details such as terminals, connectivity nodes, line segments, and other CIM objects. As a result, the time necessary to generate CIM-based circuit models can lead to decreased productivity and delay in testing of power system scenarios.

Thus, a system and method for generating CIM-based circuit models from simplified circuit definitions would be welcome in the art. A system and method that would provide for the automatic generation of objects required by the CIM model that are not essential for the particular testing purposes of an individual circuit, such as terminals, line segments, connectivity nodes, and other objects, would be particularly useful.

### BRIEF DESCRIPTION OF THE INVENTION

Aspects and advantages of the invention will be set forth in part in the following description, or may be obvious from the description, or may be learned through practice of the invention.

The present invention is directed to a method for generating a common information model (CIM) based circuit model. The method includes receiving a circuit representation file specifying attributes of one or more circuit elements. The method further includes generating with a computing device a CIM-based circuit model from the circuit representation file. The CIM-based circuit model includes a first CIM-based circuit object and a second CIM-based circuit object. The first and second CIM-based circuit objects are generated based at least in part on attributes specified in the circuit representation file. The method further includes generating with the computing device an unspecified CIM required connection in the CIM-based circuit model between the first CIM-based circuit object and the second CIM-based circuit object. The circuit representation file does not specify at least one attribute of the CIM required connection.

The invention also resides in a computer program comprising computer program code adapted to perform the steps of the above method when run on a computer.

The present invention is also directed to a computer-based system for generating a common information model (CIM) based circuit model. The system includes at least one processing device and at least one memory including the computer program described above embodied on a computer readable medium.

Variations and modifications can be made to these exemplary embodiments of the present disclosure.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 illustrates a block diagram of an exemplary computing device that can be used to implement methods and systems according to exemplary embodiments of the present disclosure;
FIG. 2 illustrates a block diagram of an exemplary system according to an exemplary embodiment of the present disclosure;
FIG. 3 illustrates a flow chart of an exemplary method according to an exemplary embodiment of the present disclosure; and
FIGS. 4 and 5 illustrate a flow chart of an exemplary method for generating an unspecified CIM required connection according to an exemplary embodiment of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to systems and methods for generating common information model (CIM) based models of power systems to be used as a testing framework for power system software applications. Valid CIM-based circuit models can be constructed from simplified circuit definitions. In a particular implementation, CIM objects required by the CIM model that are not essential for the testing purposes of an individual circuit, such as terminals, line segments, connectivity nodes, and other CIM objects, are generated automatically and are not required in the circuit specifications.

A loader module can be used to read simplified circuit definitions. For instance, in one implementation, a loader module reads circuit definitions written using a text-based, comma-separated value syntax. The loader module reads the definitions and creates, for instance through Java reflection, CIM objects, attributes, and measurements. A model generator module can be used to generate a CIM-based circuit model from the CIM objects. The model generator module allows the loader module to specify connections between two objects without specifying all the CIM required details. For instance, the CIM model requires that connections between two objects include terminals, which must connect to connectivity nodes, which must be connected via line segments. If not specified, the model generator module will construct the required CIM objects to connect the specified equipment.

In this manner, the present subject matter allows testers to set-up CIM-based power system models using simplified circuit specifications. These specifications do not require terminals and do not require (but do allow) the tester to explicitly declare connectivity nodes or line segments. The text based, comma separated syntax used by the loader module can be generated by a variety of tools, including a text editor or spreadsheet tool, allowing for reduced time in the development and testing of power system scenarios. Fast availability of test circuit scenarios without the need for a complex simulation framework or for extraction of data from a real model allows for quick-start development of power system software and allows for reduction in development costs.

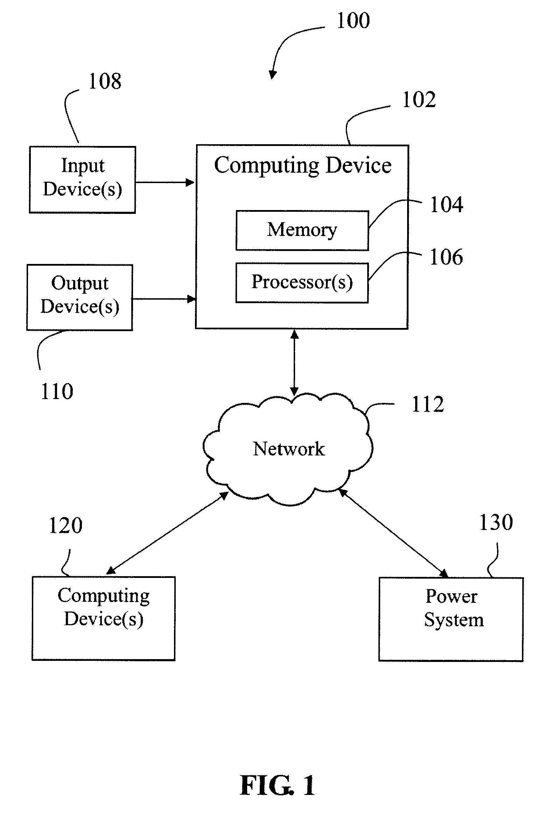

FIG. 1 illustrates an exemplary computer-based system 100 that can be used to implement the systems and methods of the present disclosure. The computer based system 100 can include one or more general-purpose or customized computing devices adapted in any suitable manner to provided desired functionality. Computer based system 100 may be adapted to provide additional functionality complementary or unrelated to the present subject matter as well. As illustrated, computer-based system 100 can include a computing device 102 having a memory 104 and a processor 106. Memory 104 can be provided as a single or multiple portions of one or more varieties of computer-readable media, such as but not limited to any combination of volatile memory (e.g., random access memory (RAM, such as DRAM, SRAM, etc.) and nonvolatile memory (e.g., ROM, flash, hard drives, magnetic tapes, CD-ROM, DVD-ROM, etc.) or any other memory devices including diskettes, drives, other magnetic-based storage media, optical storage media, solid state storage media and others.

Processor 106 can be a microprocessor or other suitable processing device configured to execute software instructions rendered in a computer-readable form stored in memory 104. When software is used, any suitable programming, scripting, or other type of language or combinations of languages may be used to implement the teachings contained herein. In other embodiments, the methods disclosed herein may alternatively be implemented by hard-wired logic or other circuitry, including, but not limited to application-specific circuits.

As illustrated computing device 102 can be coupled to input device(s) 108 and output device(s) 110. Exemplary input device(s) 108 can include but are not limited to a keyboard, touch-screen monitor, eye tracker, microphone, mouse and the like. Exemplary output device(s) 110 can include but are not limited to monitors, printers or other devices for visually depicting output data created in accordance with the disclosed technology.

Computing device 102 can be connected to other computing devices 120 over network 112. Network 112 can be comprise any number and/or combination of hard-wired, wireless, or other communication links. One of ordinary skill in the art will recognize that the inherent flexibility of computer-based systems allows for a great variety of possible configurations, combinations, and divisions of tasks and functionality between and among components. For instance, the processes discussed herein may be implemented using single computing device 102 or across multiple computing devices, such as computing device 102 and computing device(s) 120 working in combination. Computing device 102 can also be coupled to power system 130 over network 112. Computer based system 100 can receive information and data from the actual power system 110 for use by power system software stored in memory 104 of computing device 102.

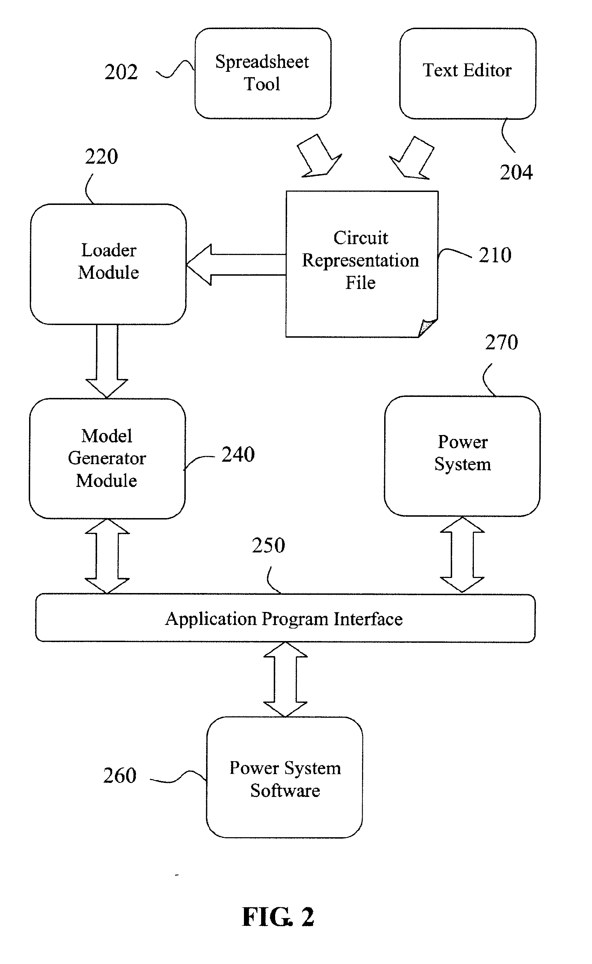

FIG. 2 illustrates an exemplary system 200 for generating a CIM-based model according to an exemplary embodiment of the present disclosure. As illustrated, system 200 includes a text editor 204 or a spreadsheet tool 202, a loader module 220, a model generator module 240, and an application program interface 250. Text editor 202, spreadsheet tool 204, loader module 220, model generator module 240, and application program interface 250 can be software implemented modules executed on one or more computing devices of a computer-based system.

Spreadsheet tool 202 or text editor 204 can be used to generate a simplified circuit representation file 210. Simplified circuit representation file 210 specifies attributes of one or more circuit elements to be modeled in a CIM-based power system circuit model.

In one particular implementation of the present disclosure, the simplified circuit representation file 210 can be written in a comma-separated text based syntax. The comma-separated text based circuit representation file 210 simplifies the writing of an electric circuit specification by using standard text files that can be created and edited using spreadsheet tool 202 and text editor 204. Parsing of the text file is simplified by using the comma-separated values syntax.

The text based simplified circuit representation file 210 can include a number of sections, with each section being separated by one or more comment lines. In a particular embodiment, the text based simplified circuit representation file 210 includes a component section, a connectivity section, and a measurements section. The component section of the text based simplified circuit representation file 210 defines the circuit conducting equipment objects of a particular CIM class (i.e. transformer, capacitor, substation, transmission line, etc.). The attributes, such as the master resource ID (MRID) and CIM class of the object can be specified in the component section of the circuit representation file 210. The component section can define one or more objects of the same CIM class.

The connectivity section defines how the conducting equipment objects are connected in the circuit. There can be multiple connectivity sections in the same circuit representation file 210. Each line in the connectivity section can include a list of component MRIDs and can specify the connections between the components in the list.

The way the components are specified in a line of the connectivity section is determined by the first element in the list. For example, if the first element in the line is the MRID of a connectivity node, then all of the subsequent elements in the list are connected to that connectivity node. If the first element in the line is the MRID of a transformer, then all the subsequent elements in the list must be transformer windings within the transformer. Otherwise, all the elements in the list are daisy-chained in the order in which they are listed.

The measurement section of the text based simplified circuit representation file 210 defines conducting equipment measurements. There can be multiple measurement sections. The first element in a line can be the MRID of the conducting equipment on which the measurement is set. The second element in the last can be the MRID of conducting equipment that is connected to the first conducting equipment, as specified in the connectivity section. This information can be used to determine the terminal in the conducting equipment on which to set the measurement. The third and fourth elements in the list can be the CIM measurement type and value.

Loader module 220 parses the circuit representation file 210 to generate one or more CIM-based objects as specified in the simplified circuit representation file 210. While a single loader module 220 is illustrated in FIG. 2, multiple loader modules 220 can be used as desired. Each loader module 220 can be configured to read a specific type of simplified circuit representation file. For instance, one loader module 220 can be used to load a comma-separated text based circuit representation file. Another loader module 220 can be used to load a graphic-based circuit representation file.

The model generator module 240 includes an application program interface to be used by loader module 220 for building the CIM-based power system model. The application program interface of the model generator module 240 creates CIM based objects as specified in the circuit representation file The model generator module 240 further generates unspecified CIM required connections in the CIM based model as will be discussed in detail below.

The model generator module 240 provides the CIM based model to application program interface 250 for use by power system software 260. The application program interface 250 can be the same interface layer that power system software 260 uses to retrieve information from an actual power system 270. This allows the model generator module to impersonate a real power system and to supply circuit information to the power systems software 260.

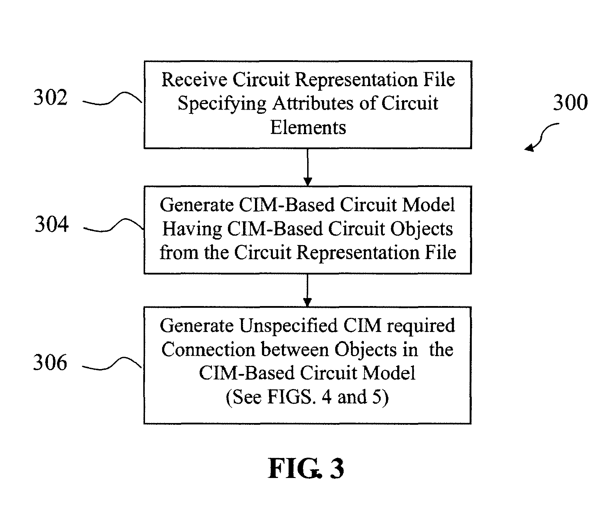

FIG. 3 illustrates an exemplary method 300 for generating a CIM-based circuit model according to an exemplary embodiment of the present disclosure. At 302, the method 300 includes receiving a circuit representation file specifying attributes of circuit elements. For instance, the loader module 220 of FIG. 2 can receive a text based circuit representation file 210 specifying attributes of circuit elements.

Referring back to FIG. 3 at 304, the method 300 includes generating a CIM-based circuit model having CIM-based circuit objects from the circuit representation file. For instance, in a particular embodiment, loader module 220 of FIG. 2 can parse the circuit representation file 210 and create CIM conducting equipment objects as specified in a component section of the text based circuit representation file 210, can create and assign measurements as specified in the measurement section of the circuit representation file 210, and can connect equipment as specified in the connectivity section of the circuit representation file 210.

The CIM based objects created from the circuit representation file 210 can be provided to model the model generator module 240. An application program interface in the model generator 240 can take string arguments, and use Java reflection to generate the CIM objects (conducting equipment objects, measurement objects, container objects, etc.) as required.

Referring back to FIG. 3, the method 300 generates an unspecified CIM required connection between objects in the CIM-based circuit model. CIM models requires objects to have terminals, which must be connected to conductivity nodes, which must be connected by line segments. The method 300 automatically generates an unspecified CIM required connection, such as terminal object, conductivity node object, or line segment object, between objects in the CIM-based circuit model. This allows for simpler circuit specifications and increases efficiency.

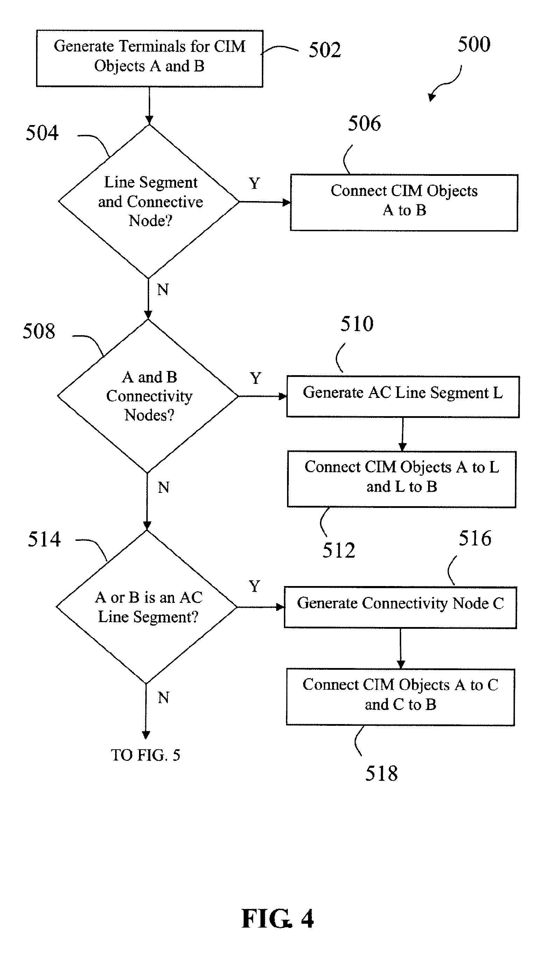

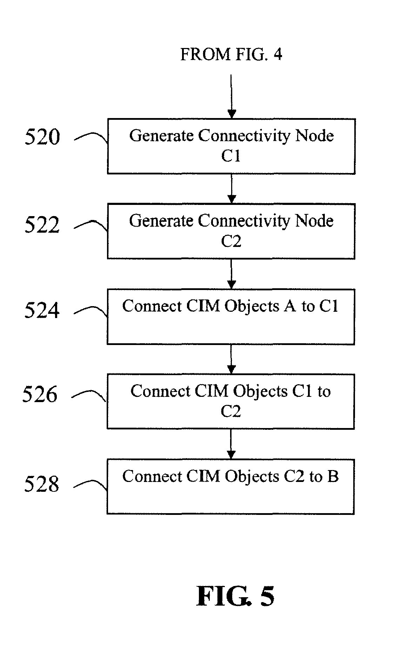

FIGS. 4 and 5 illustrate an exemplary method 500 for generating an unspecified CIM required connection between objects according to an exemplary embodiment of the present disclosure. For illustrative purposes, the method 500 will be discussed with reference to connecting two CIM objects A and B. Those of ordinary skill in the art, using the disclosures provided herein, should understand that multiple objects and multiple connections can be generated in the CIM-based model without deviating from the scope of the present disclosure.

At 502, terminal objects are automatically generated and associated with CIM objects A and B. At 504, the method 500 determines if one of the objects A or B is a line segment and if the other object is a connectivity node. If this condition is satisfied, objects A and B are connected in the CIM model as illustrated at 506. If this condition is not satisfied, the method 500 proceeds to 508.

At 508, the method 500 determines if both objects A and B are connectivity nodes. If this condition is satisfied, the method 500 generates a line segment object L as shown at 510. At 512, the method connects object A to line segment object L and connects line segment object L to object B. If the condition is not satisfied, the method 500 proceeds to 514.

At 514, the method determines whether A or B is a line segment. If this condition is satisfied, the method 500 generates a connectivity node C as shown at 516. At 518, the method 500 connects object A to connectivity node C and connects connectivity node C to object B. If the condition is not satisfied, the method 500 proceeds to 520 illustrated in FIG. 7.

At 520, the method 500 generates connectivity node C1. At 522, the method generates connectivity node C2. At 524, the method 500 connects CIM object A to connectivity node C1. At 526, the method 500 connects connectivity node C1 to connectivity node C2. Finally, at 528, the method 500 connects connectivity node C2 to CIM object B.

The method 500 ensures that all CIM objects are connected through connectivity nodes as required by the CIM model and any two connected CIM objects have a line segment between them. Accordingly, a tester can generate a CIM model including all CIM required connections even though such required connections are not specified in the circuit representation file. The comma-separated text based circuit representation file further facilitates the generation of CIM-based models by allowing a tester to provide simplified circuit definitions using a text editor or a spreadsheet tool.

The present disclosure provides for fast availability of test circuit scenarios without the need for complex simulation framework or for extraction of data from a real model. This leads to reduced time in the development of test scenarios and reduction in development costs. The simplified circuit representation files provides testers the ability to report or communicate circuit scenarios in a visual way using a spreadsheet tool or text editor. The ability to develop circuit specification omitting unnecessary information required by the CIM-based model, such as CIM required connections, simplifies the creation of test case scenarios and verification of test results.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method (300) for generating a common information model (CIM) based circuit model, comprising:
receiving a circuit representation file (210) specifying attributes of one or more circuit elements;
generating a CIM-based circuit model from the circuit representation file (210), the CIM-based circuit model comprising a first CIM-based circuit object and a second CIM-based circuit object, the first CIM-based circuit object and the second CIM-based circuit object being generated based at least in part on the attributes specified in the circuit representation file (210) (320); and
generating an unspecified CIM required connection in the CIM-based circuit model between the first CIM-based circuit object and the second CIM-based circuit object (330);
wherein the circuit representation file (210) does not specify at least one attribute for the unspecified CIM required connection.

2. The method of claim 1, wherein the unspecified CIM required connection comprises at least one of a terminal object, connectivity node object, or a line segment object.

3. The method of claim 1 or 2, wherein the circuit representation file (210) comprises a comma-separated text file.

4. The method of claim 3, wherein the comma-separated text file comprises a component section, a connectivity section, and a measurement section, wherein the component section defines one or more circuit conducting equipment objects of a particular CIM class, the connectivity section defines how the conducting equipment objects are connected, and the measurement section defines conducting equipment measurements.

5. The method of claim 3, wherein the comma-separated text file is received at a loader module, and further comprising:
parsing the comma-separated text file with the loader module; and
generating the CIM-based circuit model from the parsed text file.

6. The method of any of claims 1 to 4, wherein generating with the computing device an unspecified CIM required connection in the CIM-based circuit model (330) comprises:
generating at least one first terminal object for the first CIM-based circuit object (502);
generating at least one second terminal object for the second CIM-based circuit object (502);
identifying the CIM class associated with the first CIM-based circuit object and the CIM class associated with the second CIM-based circuit object (504, 508, 514); and
generating a CIM required connection between the first terminal object and the second terminal object based at least in part on the CIM class of the first CIM-based circuit object and the CIM class of the second CIM-based circuit object (506, 510, 512,516,518,520,522,524,526,528).

7. The method of any of claims 1 to 6, wherein the method (300) further comprises providing the CIM-based model to an application program interface (250) for retrieval by a power system software application (260).

8. A computer program comprising computer program codes means adapted to perform all the steps of the method of any of claims 1 to 7, when run on a computer.

9. The computer program of claim 8, embodied on a computer readable medium.

10. A computer-based system (100) for generating a common information model (CIM) based circuit model, comprising:
at least one processing device (106); and
at least one memory (104) comprising the computer program of claim 9.
